# EUROPEAN PATENT APPLICATION

(11) **EP 1 102 057 A1**
(43) Date of publication of application: **23.05.2001**
(21) Application number: 99309130.5
(22) Date of filing: 17.11.1999
(51) Int. Cl.: G01N 21/03, B01L 3/00

(54) **Sample holder for use in spectroscopic analysis**

(71) Applicant: EG & G Perkin Elmer Ltd., Beaconsfield, Buckinghamshire HP9 1QA (GB)
(72) Inventor: Hoeksma, James, Farnham Royal, Berkshire SL2 1HP (GB)
(74) Representative: Smith, Norman Ian

(57) **Abstract**

A sample holder for use in spectroscopic analysis comprises two moulded, interengageable housing parts (10, 11), preferably interconnected by integral hinge (12). Each housing part has a window (20, 26) which is transparent to the radiation used in the analysis. The housing parts when interengaged define a compartment (32), of a defined thickness for a sample to be analysed. The holder is relatively cheap to produce and easy to use.

## Description

The invention relates to sample holders, sometimes known as cells, which are used in spectroscopic analysis and in particular, but not exclusively, analysis using infrared radiation. Typically a sample holder will form part of an accessory used in conjunction with a spectrometer such as an FT-IR spectrometer.

In FT-IR spectrometry there is a need for a relatively cheap sample holder which is capable of holding a sample, typically a liquid sample, having a thickness in the region of 0.5 mm so that it is located in the path of the radiation beam of the spectrometer. One known type of sample holder, which is used to achieve this, comprises a relatively high quality glass bottle known as a cuvette, but such cuvettes are very expensive and therefore not considered as disposable. Other known sample holders include glass sided cells with inlet and outlet ports or assemblies of flat glass windows separated by a spacer.

The present invention is concerned with the design of a sample holder which is relatively cheap, simple to use and can define the required thickness of sample.

According to the present invention there is provided a sample holder for use in spectroscopic analysis, said holder comprising two moulded interengageable housing parts, each having a window which is transparent to the radiation used in said analysis, said housing parts being so configured and arranged that when interengaged they define a compartment of predetermined thickness in which a sample for analysis can be accommodated.

The housing parts may be formed of moulded plastics material.

Each housing part may have a cylindrical portion, said cylindrical portions being so dimensioned that the external surface of one can engage within the internal surface of the other when the housing parts are interengaged. The interengagement may be a frictional interengagement. Alternatively, the engagement may comprise the location of an annular projection on one housing part within an annular groove on the other housing part.

The housing parts may be hinged together. The hinge may be formed integrally with the housing parts.

Each window may comprise a glass window encapsulated in the moulded material. The windows may have different thicknesses. The thickness of the compartment defined by the interengaged housing parts may be of the order of 0.5 mm.

The invention will be described now by way of example only, with particular reference to the accompanying drawings. In the drawings:
Figure 1 is a perspective view of a sample holder in accordance with an embodiment of the present invention;
Figure 2 is a side elevation of the sample holder, and
Figure 3 is a section on the line II-II of Figure 2.

Referring now to the drawings, a sample holder for use as part of an accessory in FT-IR spectroscopy comprises two housing portions (10) and (11) linked together by a hinge (12). The housing portions (10, 11) and the hinge (12) are moulded from plastics material as a single integral element. The housing portion (10) comprises are generally planar part (14) which projects from the hinge (12) and which carries a shallow tubular part (16), the free end of which has an inwardly directed annular flange (18). A glass window (20) is encapsulated within the tubular part (16) and held in position by the flange (18).

The housing part (11) has a similar planar part (21) which carries a shallow tubular portion (22). The tubular portion has an inwardly directed annular flange (24), which holds in place a second window (26) which is encapsulated into the second housing portion (11) and held in position by the flange (24). The section of the tubular part (22) above the flange (24) has an inner diameter approximately the same as the outer diameter of the tubular part (16) of the first housing part (10). This enables the tubular portion (16) to be received within the tubular part (22) with the flanges (18) and (24) in abutment. The tubular members (16) and (22) can be arranged to interengage by frictional engagement. Alternatively, a circumferential rib can be provided on one of the tubular member (16) or (22) for engagement within a correspondingly shaped annular groove on the other tubular member. This provides a snap-fit type engagement.

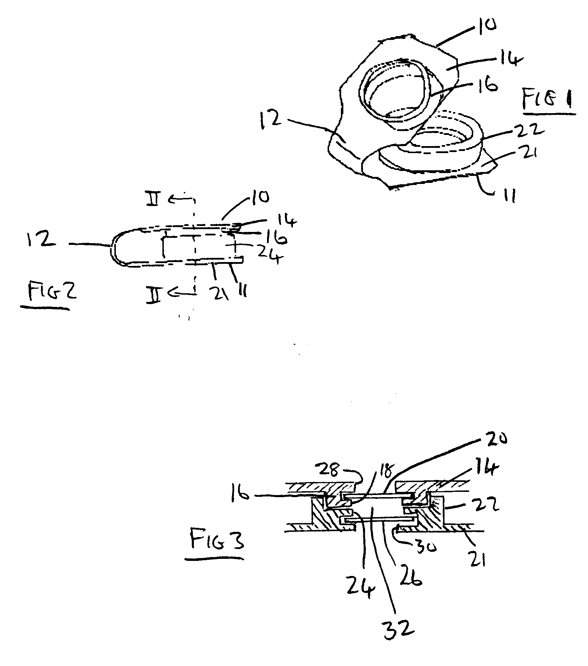

The planar part (14) of the housing part (10) has formed therein a circular aperture (28), which is coaxial with the window (20). Similarly planar part (21) of the housing part (11) also has a circular window (30) coaxial with the tubular member (22). Apertures (28) and (30) allow analysing radiation to pass through the windows (20) and (26) to a compartment (32) shown in Figure 3 of the drawings.

When the two housing parts (10) and (11) are closed as shown in Figure 3, the compartment (32) provides a space within which can be located a sample for analysis and this space has a defined thickness which typically can be of the order of 0.5 mm. The sample holder is particularly suitable for analysing liquid samples and the viscosity of these sample can have a wide range including that from shampoo to vaseline.

It has been found that the thickness of the window (20) should be different from that of the thickness of the window (26) in order to avoid interference effects.

It will be appreciated that the sample holder described above can be used as part of an accessory in an FT-IR spectrometer. Initially, the holder is closed without any sample present so that it is in the condition shown in Figures 2 and 3 of the drawings and placed in the beam path of a spectrometer with its radial dimension generally vertical. What is known as a background measurement is then taken and the spectral data is stored. The sample holder is then re-opened and filled with a sample to be analysed. The holder is again closed and replaced in the beam path of the spectrometer and a further measurement taken with the sample in the sample holder. As will be apparent to those skilled in the art, a spectrum of the sample is then obtained by subtracting the background measurement from the measurement obtained with the sample in the holder.

A feature of the present holder is that it is relatively cheap to produce and easy to use. Its cheapness means that after use, it can be either stored or simply disposed of if it is not require for use again.

## Claims

1. A sample holder for use in spectroscopic analysis, said holder comprising two moulded interengageable housing parts, each having a window which is transparent to the radiation used in said analysis, said housing parts being so configured and arranged that when interengaged they define a compartment of predetermined thickness in which a sample for analysis can be accommodated.

2. A sample holder according to claim 1, wherein the housing parts are formed of moulded plastics material.

3. A sample holder according to claim 1 or claim 2, wherein each housing part has a cylindrical portion, said cylindrical portions being so dimensioned that the external surface of one can engage within the internal surface of the other when the housing parts are interengaged.

4. A sample holder according to claim 3, wherein the interengagement is a frictional interengagement.

5. A sample holder according to claim 3, wherein the engagement comprises the location of an annular projection on one housing part within an annular groove on the other housing part.

6. A sample holder according to any preceding claim, wherein the housing parts are hinged together.

7. A sample holder according to claim 6, wherein the hinge is formed integrally with the housing parts.

8. A sample holder according to any preceding claim, wherein each window comprises a glass window encapsulated in the moulded material.

9. A sample holder according to any preceding claim, wherein the windows have different thicknesses.

10. A sample holder according to any preceding claim, wherein the thickness of said compartment is in the region of 0.5 mm.
